# EUROPEAN PATENT APPLICATION

(11) **EP 4 369 438 A1**
(43) Date of publication of application: **15.05.2024**
(21) Application number: 22861713.0
(22) Date of filing: 24.08.2022
(51) Int. Cl.: H01M 4/36, H01M 4/525, H01M 4/505, H01M 4/62, H01M 10/052, C01G 53/00

(54) **POSITIVE ELECTRODE ACTIVE MATERIAL AND METHOD FOR PRODUCING POSITIVE ELECTRODE ACTIVE MATERIAL**

(30) Priority: 24.08.2021 KR 20210111848
(71) Applicant: LG Chem, Ltd., Yeongdeungpo-gu Seoul 07336 (KR)
(72) Inventor: LEE, Jun Won, Daejeon 34122 (KR); EOM, Jun Ho, Daejeon 34122 (KR); KWAK, No Woo, Daejeon 34122 (KR); KIM, Ji Hye, Daejeon 34122 (KR)
(74) Representative: Hoffmann Eitle
(86) International application number: PCT/KR2022/012648
(87) International publication number: WO 2023/027504

(57) **Abstract**

The present invention relates to a positive electrode active material including a lithium transition metal oxide which contains 70 mol% or more of nickel (Ni) among total metals excluding lithium and is in a form of a secondary particle formed by aggregation of primary particles; and a coating layer containing boron (B) which is formed on the lithium transition metal oxide, wherein an average aspect ratio of the primary particles present on a surface of the lithium transition metal oxide is in a range of 1.8 to 6.0, a method of preparing the positive electrode active material, and a positive electrode and a lithium secondary battery which include the positive electrode active material.

## Description

### TECHNICAL FIELD

### CROSS-REFERENCE TO RELATED APPLICATIONS

This application claims priority from Korean Patent Application No. 10-2021-0111848, filed on August 24, 2021, the disclosure of which is incorporated by reference herein.

### TECHNICAL FIELD

The present invention relates to a positive electrode active material, a positive electrode and a lithium secondary battery which include the positive electrode active material, and a method of preparing the positive electrode active material.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal oxides have been used as a positive electrode active material of the lithium secondary battery, and, among these oxides, a lithium cobalt oxide, such as LiCoO₂, having a high operating voltage and excellent capacity characteristics has been mainly used. However, since the LiCoO₂ has very poor thermal properties due to an unstable crystal structure caused by delithiation and is expensive, there is a limitation in using a large amount of the LiCoO₂ as a power source for applications such as electric vehicles.

Lithium manganese composite metal oxides (LiMnO₂, LiMn₂O₄, etc.), lithium iron phosphate compounds (LiFePO₄, etc.), or lithium nickel composite metal oxides (LiNiO₂, etc.) have been developed as materials for replacing the LiCoO₂. Among these materials, research and development of the lithium nickel composite metal oxides, in which a large capacity battery may be easily achieved due to a high reversible capacity of about 200 mAh/g, have been more actively conducted. However, the LiNiO₂ has limitations in that the LiNiO₂ has poorer thermal stability than the LiCoO₂ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the LiNiO₂, LiNi_{1-α}Co_{α}O₂ (α=0.1 to 0.3), in which a portion of nickel is substituted with cobalt, or a lithium nickel cobalt metal oxide, in which a portion of nickel is substituted with manganese (Mn), cobalt (Co), or aluminum (Al), has been developed.

However, with respect to the lithium nickel cobalt metal oxide, there is a limitation in that capacity is low. In order to increase the capacity of the lithium nickel cobalt metal oxide, a method of increasing an amount of nickel included in the lithium nickel cobalt metal oxide has been studied, but, in this case, a washing process was essential due to the presence of unreacted residual lithium on a surface thereof, and, since surface defects of the positive electrode active material occurred due to the washing process, life characteristics of the battery were degraded.

In order to overcome this issue, conventionally, a method of forming a coating layer on the surface of the positive electrode active material at a low temperature after washing of the positive electrode active material has been studied, but there are still limitations in terms of improving high-temperature life characteristics and resistance characteristics.

Thus, there is a need to develop a positive electrode active material having improved high-temperature life characteristics and resistance characteristics.

### DISCLOSURE OF THE INVENTION

### TECHNICAL PROBLEM

An aspect of the present invention provides a positive electrode active material having improved high-temperature life characteristics and resistance characteristics and a method of preparing the positive electrode active material.

However, the object of the present invention is not limited to the aforesaid, but other objects not described herein will be clearly understood by those skilled in the art from descriptions below.

### TECHNICAL SOLUTION

In order to solve the above-described tasks, the present invention provides a positive electrode active material, a method of preparing a positive electrode active material, a positive electrode, and a lithium secondary battery.
(1) The present invention provides a positive electrode active material including a lithium transition metal oxide which contains 70 mol% or more of nickel (Ni) among total metals excluding lithium and is in a form of a secondary particle formed by aggregation of primary particles; and a coating layer containing boron (B) which is formed on the lithium transition metal oxide, wherein an average aspect ratio of the primary particles present on a surface of the lithium transition metal oxide is in a range of 1.8 to 6.0.
(2) The present invention provides the positive electrode active material of (1) above, wherein the lithium transition metal oxide has a composition represented by Formula 1.

   [Formula 1] LiₓNiₐ₁Co_{b1}Mn_{c1}Al_{d1}Bₑ₁M¹_{f1}O₂

   In Formula 1,
   M¹ is at least one selected from zirconium (Zr), tungsten (W), magnesium (Mg), cerium (Ce), hafnium (Hf), tantalum (Ta), lanthanum (La), titanium (Ti), strontium (Sr), and barium (Ba), and
   0.90≤x≤1.12, 0.70≤a1≤1.0, 0≤b1≤0.30, 0≤c1≤0.30, 0≤d1≤0.20, 0<e1≤0.20, 0≤f1≤0.10, and a1+b1+c1+d1+e1+f1=1.
(3) The present invention provides a method of preparing a positive electrode active material which includes steps of: (A) preparing a pre-sintered product by performing primary sintering of a reaction mixture including a lithium-containing raw material and a positive electrode active material precursor containing 70 mol% or more of nickel (Ni) among total metals at a primary sintering temperature; (B) preparing a lithium transition metal oxide by mixing the pre-sintered product and a first boron-containing raw material and performing secondary sintering at a secondary sintering temperature; and (C) mixing the lithium transition metal oxide and a second boron-containing raw material and performing a heat treatment to form a coating layer, wherein a ratio of the primary sintering temperature to the secondary sintering temperature is in a range of 0.7 to 0.9.
(4) The present invention provides the method of preparing a positive electrode active material of (3) above, wherein the positive electrode active material precursor has a composition represented by Formula 2-1 or Formula 2-2.

   [Formula 2-1] Niₐ₂Co_{b2}Mn_{c2}M²_{d2}(OH)₂

   [Formula 2-2] Niₐ₂Co_{b2}Mn_{c2}M²_{d2}O·OH

   In Formula 2-1 and Formula 2-2,
   M² is at least one selected from Zr, boron (B), W, Mg, Ce, Hf, Ta, La, Ti, Sr, Ba, Ce, Hf, fluorine (F), phosphorus (P), sulfur (S), and La, and
   0.70≤a2≤1.0, 0≤b2≤0.30, 0≤c2≤0.30, and 0≤d2≤0.10.
(5) The present invention provides the method of preparing a positive electrode active material of (3) or (4) above, wherein the reaction mixture further includes an aluminum-containing raw material.
(6) The present invention provides the method of preparing a positive electrode active material of any one of (3) to (5) above, wherein the primary sintering temperature is in a range of 300°C to 750°C.
(7) The present invention provides the method of preparing a positive electrode active material of any one of (3) to (6) above, wherein the first boron-containing raw material is at least one selected from H₃BO₃, H₄BO₄, B₂O₃, LiBO₂, Li₂B₄O₇, B₄C, AlBO₂, and AlB₂O₄.
(8) The present invention provides the method of preparing a positive electrode active material of any one of (3) to (7) above, wherein the secondary sintering temperature is in a range of 500°C to 900°C.
(9) The present invention provides the method of preparing a positive electrode active material of any one of (3) to (8) above, wherein the second boron-containing raw material is at least one selected from H₃BO₃, H₄BO₄, B₂O₃, LiBO₂, Li₂B₄O₇, B₄C, AlBO₂, and AlB₂O₄.
(10) The present invention provides the method of preparing a positive electrode active material any one of (3) to (9) above, wherein the second boron-containing raw material is mixed in an amount of 0.1 part by weight to 2.0 parts by weight based on 100 parts by weight of the lithium transition metal oxide.
(11) The present invention provides the method of preparing a positive electrode active material any one of (3) to (10) above, wherein the heat treatment is performed at a temperature of 200°C to 400°C.
(12) The present invention provides a positive electrode including the positive electrode active material of (1) or (2).
(13) The present invention provides a lithium secondary battery including the positive electrode of (12).

### ADVANTAGEOUS EFFECTS

According to the present invention, in a case in which a positive electrode active material includes a lithium transition metal oxide which contains 70 mol% or more of nickel (Ni) among total metals excluding lithium and is in a form of a secondary particle formed by aggregation of primary particles; and a coating layer containing boron (B) which is formed on the lithium transition metal oxide, wherein an average aspect ratio of the primary particles present on a surface of the lithium transition metal oxide is in a range of 1.8 to 6.0, high-temperature life characteristics and resistance characteristics of a battery including the same are excellent.

According to the present invention, during preparation of the positive electrode active material, in a case in which a specific amount of a first boron-containing raw material is added in a secondary sintering step after primary sintering, and sintering is performed under a condition in which a primary sintering temperature and a secondary sintering temperature satisfy a specific ratio, the primary particles present on the surface of the prepared positive electrode active material may have a specific aspect ratio.

### BRIEF DESCRIPTION OF THE DRAWINGS

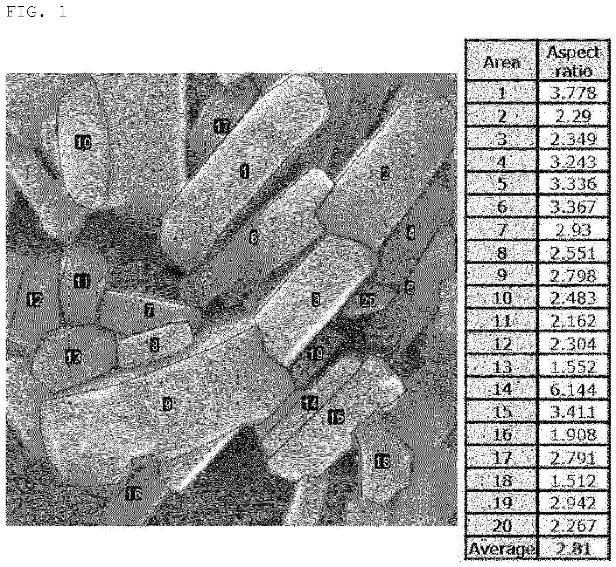

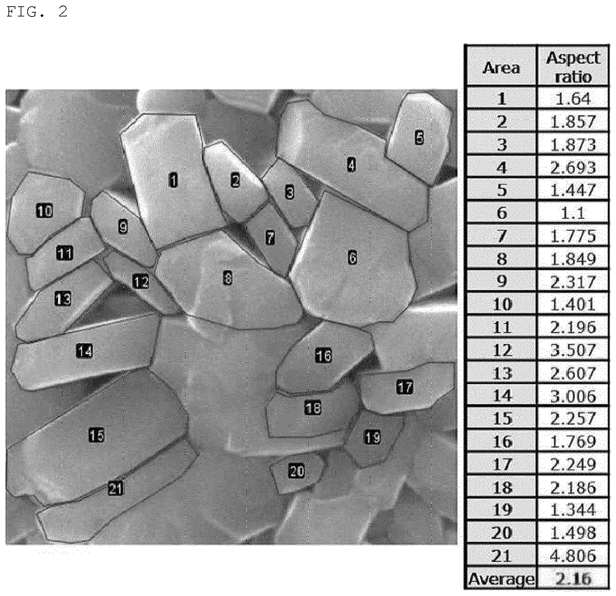

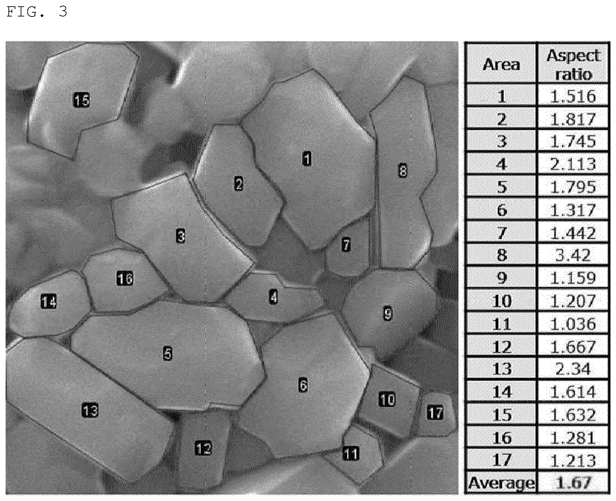

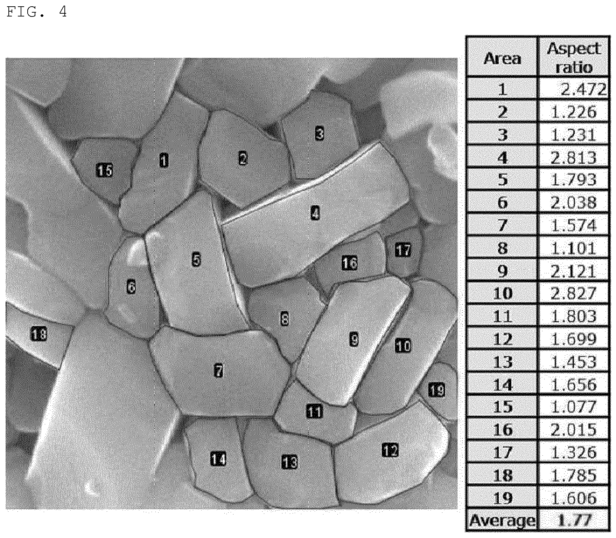

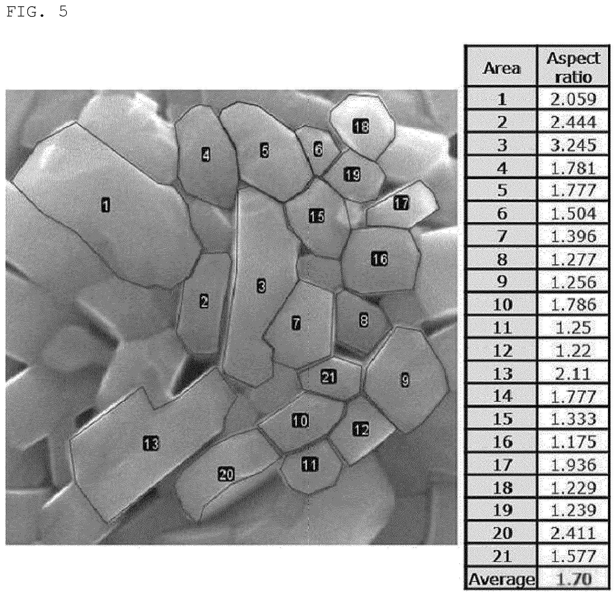

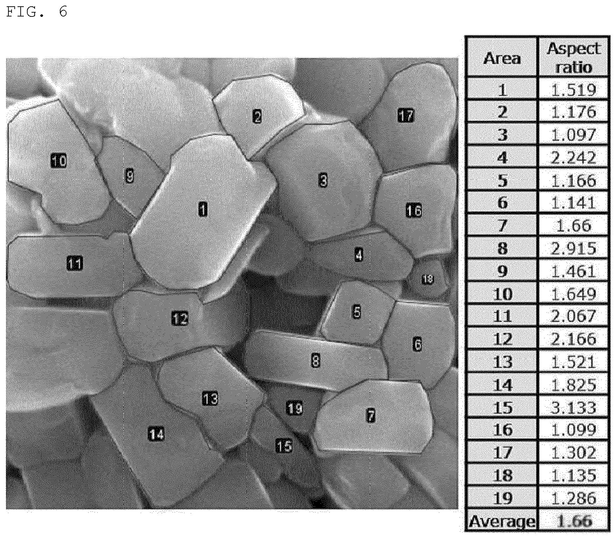

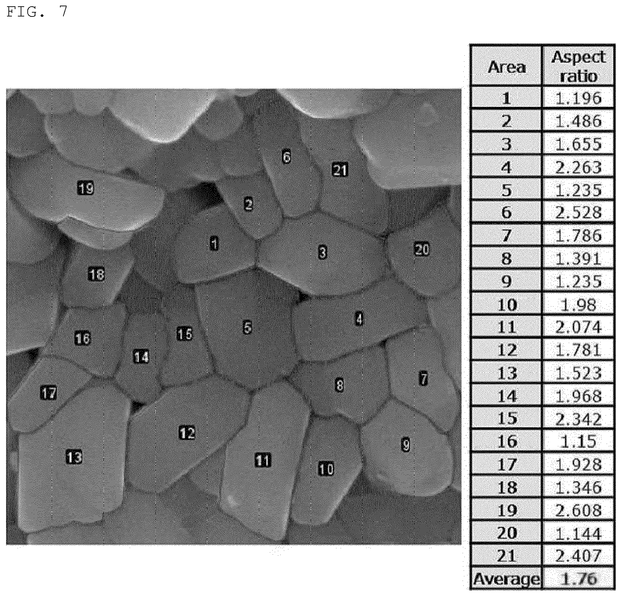

FIGS. 1 to 7 are views illustrating scanning electron microscope (SEM) images of positive electrode active materials prepared in Examples 1 and 2 and Comparative Examples 1 to 5 and average aspect ratio measurement tables of primary particles present on surfaces of the positive electrode active materials in sequence, respectively.

### MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The term "on" in the present specification means not only a case in which one component is formed directly on an upper surface of another component, but also includes a case in which intervening components may also be present.

In the present specification, the expression 'primary particle' denotes the smallest unit of particles recognized when a positive electrode active material is observed through a scanning electron microscope, and the expression 'secondary particle' denotes a secondary structure formed by aggregation of a plurality of the primary particles.

### Positive Electrode Active Material

A positive electrode active material according to the present invention includes a lithium transition metal oxide which contains 70 mol% or more of nickel (Ni) among total metals excluding lithium and is in a form of a secondary particle formed by aggregation of primary particles; and a coating layer containing boron (B) which is formed on the lithium transition metal oxide, wherein an average aspect ratio of the primary particles present on a surface of the lithium transition metal oxide is in a range of 1.8 to 6.0. The inventors of the present invention have found that both high-temperature life characteristics and resistance characteristics are improved in this case, thereby leading to the completion of the present invention.

In the present invention, the average aspect ratio of the primary particles present on the surface of the positive electrode active material was obtained by the following method. First, after selecting a shape of one primary particle desired to be measured from a scanning electron microscope (SEM) image of the positive electrode active material using an Image J program (selecting it with a tool of the Image J program), Shape Descriptors was checked in Set Measure of Analyze and measurement was performed to obtain a ratio (aspect ratio) of a major axis to a minor axis passing through a center of an elliptical shape fitted similar to the shape of the primary particle. Aspect ratios of a few tens of primary particles were obtained for each positive electrode active material, and an average thereof was obtained to define this as the average aspect ratio of the primary particles.

Since the positive electrode active material according to the present invention not only includes the coating layer containing B, but the average aspect ratio of the primary particles present on the surface of the lithium transition metal oxide also satisfies 1.8 to 6.0, the high-temperature life characteristics and resistance characteristics may be improved without a significant loss of capacity and output characteristics of a battery including the same. The average aspect ratio of the primary particles present on the surface of the lithium transition metal oxide may be 1.8 or more, 1.9 or more, 2.0 or more, 2.1 or more, 3.0 or less, 4.0 or less, 5.0 or less, and 6.0 or less in terms of further improving performance of the battery.

In a case in which the average aspect ratio of the primary particles present on the surface of the lithium transition metal oxide is less than 1.8, since a ratio of (001) plane with stable surface energy is decreased, there is a problem in that the high-temperature life characteristics and resistance characteristics of the battery are degraded. In addition, in a case in which the average aspect ratio of the primary particles present on the surface of the lithium transition metal oxide is greater than 6.0, since a plane, on which lithium may move, is limited, there is a problem in that the capacity and output characteristics of the battery are degraded.

The coating layer may be a coating layer including a compound such as a boron oxide or Li-B-O solid solution.

According to the present invention, the lithium transition metal oxide may have a composition represented by the following Formula 1 in terms of improving capacity of the battery.

[Formula 1] LiₓNiₐ₁Co_{b1}Mn_{c1}Al_{d1}Bₑ₁M¹_{f1}O₂

In Formula 1,
M¹ is at least one selected from zirconium (Zr), tungsten (W), magnesium (Mg), cerium (Ce), hafnium (Hf), tantalum (Ta), lanthanum (La), titanium (Ti), strontium (Sr), and barium (Ba), and
0.90≤x≤1.12, 0.70≤a1≤1.0, 0≤b1≤0.30, 0≤c1≤0.30, 0≤d1≤0.20, 0<e1≤0.20, 0≤f1≤0.10, and a1+b1+c1+d1+e1+f1=1.
a1 represents an atomic fraction of nickel among metallic elements other than lithium in the positive electrode active material, wherein a1 may be 0.70 or more, 0.80 or more, 0.85 or more, 0.95 or less, 0.98 or less, and 1.0 or less in terms of improving the capacity of the battery.
b1 represents an atomic fraction of cobalt among the metallic elements other than lithium in the positive electrode active material, wherein b1 may be 0 or more, greater than 0, 0.01 or more, 0.10 or less, 0.20 or less, and 0.30 or less.
c1 represents an atomic fraction of manganese among the metallic elements other than lithium in the positive electrode active material, wherein c1 may be 0 or more, greater than 0, 0.01 or more, 0.10 or less, 0.20 or less, and 0.30 or less.
d1 represents an atomic fraction of aluminum among the metallic elements other than lithium in the positive electrode active material, wherein d1 may be 0 or more, greater than 0, 0.01 or more, 0.05 or less, 0.10 or less, and 0.20 or less. Specifically, d1 may be greater than 0, 0.01 or more, 0.05 or less, 0.10 or less, and 0.20 or less in terms of improving structural stability, lifetime, and thermal stability.
e1 represents an atomic fraction of boron among the metallic elements other than lithium in the positive electrode active material, wherein e1 may be greater than 0, 0.005 or more, 0.01 or more, 0.05 or less, 0.10 or less, and 0.20 or less.
f1 represents an atomic fraction of M¹ among the metallic elements other than lithium in the positive electrode active material, wherein f1 may be 0 or more, 0.05 or less, and 0.10 or less.

### Method of Preparing Positive Electrode Active Material

A method of preparing a positive electrode active material according to the present invention includes the steps of: (A) preparing a pre-sintered product by performing primary sintering of a reaction mixture including a lithium-containing raw material and a positive electrode active material precursor containing 70 mol% or more of nickel (Ni) among total metals at a primary sintering temperature; (B) preparing a lithium transition metal oxide by mixing the pre-sintered product and a first boron-containing raw material and performing secondary sintering at a secondary sintering temperature; and (C) mixing the lithium transition metal oxide and a second boron-containing raw material and performing a heat treatment to form a coating layer, wherein the first boron-containing raw material is mixed in an amount of 0.1 part by weight to 2.0 parts by weight based on 100 parts by weight of the pre-sintered product, and a ratio of the primary sintering temperature to the secondary sintering temperature is in a range of 0.7 to 0.9.

The present inventors have found that primary particles present on a surface of the positive electrode active material may have a specific aspect ratio in a case in which a specific amount of the first boron-containing raw material is added in the secondary sintering step after the primary sintering and the sintering is performed under a condition, in which the primary sintering temperature and the secondary sintering temperature satisfy a specific ratio, during the preparation of the positive electrode active material. Also, with respect to a battery in which a positive electrode active material prepared according to the method of preparing a positive electrode active material of the present invention is used, the present inventors have found that initial resistance and high-temperature life characteristics and resistance characteristics are all improved.

The positive electrode active material prepared by the method of preparing a positive electrode active material according to the present invention may be the above-described positive electrode active material according to the present invention. That is, the positive electrode active material may be a positive electrode active material including a lithium transition metal oxide which contains 70 mol% or more of nickel (Ni) among total metals excluding lithium and is in the form of a secondary particle formed by aggregation of primary particles; and a coating layer containing B which is formed on the lithium transition metal oxide, wherein an average aspect ratio of the primary particles present on the surface of the lithium transition metal oxide is in a range of 1.8 to 6.0.

Hereinafter, the method of preparing a positive electrode active material according to the present invention will be described in more detail for each step.

### Step (A)

Step (A) is a step of preparing a pre-sintered product by performing primary sintering of a reaction mixture including a lithium-containing raw material and a positive electrode active material precursor containing 70 mol% or more of nickel (Ni) among total metals.

According to the present invention, the positive electrode active material precursor may have a composition represented by Formula 2-1 or Formula 2-2 below.

[Formula 2-1] Niₐ₂Co_{b2}Mn_{c2}M²_{d2}(OH)₂

[Formula 2-2] Niₐ₂Co_{b2}Mn_{c2}M²_{d2}O·OH

In Formula 2-1 and Formula 2-2,
M² is at least one selected from Zr, boron (B), W, Mg, Ce, Hf, Ta, La, Ti, Sr, and Ba, and
0.70≤a2≤1.0, 0≤b2≤0.30, 0≤c2≤0.30, 0≤d2≤0.10, and a2+b2+c2+d2=1.
a2 represents an atomic fraction of nickel among metallic elements in the precursor, wherein a2 may be 0.70 or more, 0.80 or more, 0.85 or more, 0.95 or less, 0.98 or less, and 1.0 or less in terms of improving the capacity of the battery.
b2 represents an atomic fraction of cobalt among the metallic elements in the precursor, wherein b2 may be 0 or more, greater than 0, 0.01 or more, 0.10 or less, 0.20 or less, and 0.30 or less.
c2 represents an atomic fraction of manganese among the metallic elements in the precursor, wherein c2 may be 0 or more, greater than 0, 0.01 or more, 0.10 or less, 0.20 or less, and 0.30 or less.
d2 represents an atomic fraction of M² among the metallic elements in the precursor, wherein d2 may be 0 or more, 0.05 or less, and 0.10 or less.

According to the present invention, the reaction mixture may further include an aluminum-containing raw material in addition to the lithium-containing raw material and the positive electrode active material precursor. The aluminum-containing raw material may be at least one selected from Al(OH)₃, Al₂O₃, AlF₃, AlBr₃, AlPO₄, AlCl₃, Al(NO)₃, Al(NO₃)₃·9H₂O, Al₂(SO₄)₃·H₂O, Al(H₂PO₄)₃, C₂H₅O₄Al, Al(SO)₄, NaAlO₂, Al₂CoO₄, LaAlO₃, and MgAl₂O₄. In this case, since a melting point of the aluminum-containing raw material is low, aluminum is uniformly diffused to exist abundantly and uniformly on a surface of the lithium transition metal oxide, and thus, it may be easy to evenly dope Al in transition metal sites. Also, cation mixing may be suppressed to provide structural stability and improve lifetime and thermal stability.

The reaction mixture does not include a boron-containing raw material. In a case in which the boron-containing raw material is included in the reaction mixture, that is, in a case in which the boron-containing raw material is mixed during the primary sintering rather than the secondary sintering, since desired crystal growth is not achieved, the life characteristics and resistance characteristics at high temperatures may not be improved.

The lithium-containing raw material may include at least one selected from lithium hydroxide hydrate, lithium carbonate, and lithium hydroxide. The lithium-containing raw material may specifically be a lithium hydroxide hydrate, for example, LiOH·H₂O. In this case, reactivity between the lithium-containing raw material and the precursor having a high atomic fraction of nickel among the metallic elements in the precursor may be improved.

The positive electrode active material precursor and the lithium-containing raw material may be mixed in a molar ratio of 1:1.0 to 1:1.10, particularly 1:1.03 to 1:1.09, and more particularly 1:1.05 to 1:1.09. In a case in which the lithium-containing raw material is mixed in a molar ratio of less than the above range, there is a concern that capacity of the positive electrode active material to be prepared is reduced, and, in a case in which the lithium-containing raw material is mixed in a molar ratio of greater than the above range, a large amount of unreacted lithium (Li) remains as a by-product, and capacity reduction and separation of positive electrode active material particles (causing a positive electrode active material coalescence phenomenon) may occur after sintering.

According to the present invention, the primary sintering temperature may be in a range of 300°C to 750°C. The primary sintering temperature may specifically be 300°C or higher, 400°C or higher, 500°C or higher, 740°C or lower, and 750°C or lower. In a case in which the primary sintering temperature is within the above range, the primary particles present on the surface of the prepared positive electrode active material may have a specific aspect ratio.

The primary sintering may be performed in an oxygen atmosphere. For example, the primary sintering may be performed in an oxygen atmosphere containing oxygen in an amount of 90 vol% or more, specifically, 95 vol% or more. In this case, a pre-sintered product having a structurally stable phase may be formed.

The primary sintering may be performed for 2 hours to 10 hours. The primary sintering may be specifically performed for 2 hours or more, 3 hours or more, 4 hours or more, 6 hours or less, 8 hours or less, and 10 hours or less. In a case in which the primary sintering time is within the above range, sintering may be performed well without deviation for each sintering position, that is, uniformly. The primary sintering time is a time period for maintaining the primary sintering temperature, wherein it is time excluding time for increasing temperature to the temperature at which the primary sintering is performed and time for decreasing the temperature to room temperature after performing the primary sintering.

Residual unreacted lithium is present on a surface of the pre-sintered product, wherein an amount of the residual lithium may be minimized through steps (B) and (C) according to the present invention.

### Step (B)

Step (B) is a step of preparing a lithium transition metal oxide by mixing the pre-sintered product prepared in step (A) and a first boron-containing raw material and performing secondary sintering at a secondary sintering temperature. In this case, the first boron-containing raw material is mixed in an amount of 0.1 part by weight to 2.0 parts by weight based on 100 parts by weight of the pre-sintered product, and a ratio of the primary sintering temperature to the secondary sintering temperature is in a range of 0.7 to 0.9.

In the present invention, since the primary particles present on the surface of the resulting positive electrode active material have an average aspect ratio within a specific range by mixing a specific amount of the first boron-containing raw material and performing secondary sintering under a condition in which the primary sintering temperature and the second sintering temperature satisfy a specific ratio in step (B), both life characteristics and resistance characteristics at high temperatures of a secondary battery including the positive electrode active material may be improved.

According to the present invention, the first boron-containing raw material may be at least one selected from H₃BO₃, H₄BO₄, B₂O₃, LiBO₂, Li₂B₄O₇, B₄C, AlBO₂, and AlB₂O₄. The first boron-containing raw material may be specifically H₃BO₃ and B₂O₃, and may be more specifically H₃BO₃. In this case, since a melting point of the first boron-containing raw material is low, a uniform coating layer may be formed.

The first boron-containing raw material may be mixed in an amount of 0.1 part by weight to 2.0 parts by weight, specifically, 0.1 part by weight or more, 0.2 part by weight or more, 0.315 part by weight or more, 1.26 parts by weight or less, 1.5 parts by weight or less, and 2.0 parts by weight or less based on 100 parts by weight of the pre-sintered product. In a case in which the amount of the first boron-containing raw material is within the above range, since crystal growth on the surface of the positive electrode active material is controlled, the high-temperature life characteristics and resistance characteristics of the battery in which the positive electrode active material is used may be improved.

In a case in which the amount of the first boron-containing raw material is less than 0.1 part by weight based on 100 parts by weight of the pre-sintered product, the crystal growth on the surface of the positive electrode active material is not controlled, and, in a case in which the amount of the first boron-containing raw material is greater than 2.0 parts by weight, there is a problem in that capacity and resistance characteristics of the battery including the positive electrode active material are degraded.

In addition, the mixing of the lithium transition metal oxide and the first boron-containing raw material may be dry mixing. In this case, there is an advantage in that impurities may be minimized in comparison to a case of wet mixing.

In a case in which the ratio of the primary sintering temperature to the secondary sintering temperature is less than 0.7, a crystal structure is not formed even after the primary sintering is completed due to the relatively low primary sintering temperature, and, accordingly, since a large amount of boron is diffused into a positive electrode material during the secondary sintering to prevent crystal growth between transition metals, a desired crystal structure may not be obtained. In addition, in a case in which the ratio of the primary sintering temperature to the secondary sintering temperature is greater than 0.9, since the amount of boron diffusion into the positive electrode material, in which the crystal structure is already formed, is small due to the relatively high primary sintering temperature, the desired crystal structure may not be obtained. Accordingly, the average aspect ratio of the primary particles does not satisfy 1.8 to 6.0, and there is a problem in that the high-temperature life characteristics and resistance characteristics of the battery, in which the positive electrode active material is used, are degraded.

According to the present invention, the secondary sintering temperature may be in a range of 500°C to 900°C. The secondary sintering temperature may specifically be 500°C or higher, 700°C or higher, 750°C or higher, 820°C or lower, 850°C or lower, and 900°C or lower. In a case in which the secondary sintering temperature is within the above range, since boron affects the crystal growth of the primary particles, a positive electrode active material having an average aspect ratio of the primary particles present on the surface of the lithium transition metal oxide of 1.8 to 6.0 may be prepared.

The secondary sintering may be performed in an oxygen atmosphere in order to efficiently sinter the pre-sintered product including a hydroxyl group into the lithium transition metal oxide having a layered structure. For example, the secondary sintering may be performed in an oxygen atmosphere containing oxygen in an amount of 90 vol% or more, specifically, 95 vol% or more.

The secondary sintering may be performed for 2 hours to 10 hours. The secondary sintering may be specifically performed for 2 hours or more, 3 hours or more, 4 hours or more, 6 hours or less, 8 hours or less, and 10 hours or less. In a case in which the secondary sintering time is within the above range, sintering may be performed well without deviation for each sintering position, that is, uniformly. The secondary sintering time is a time period for maintaining the secondary sintering temperature, wherein it is time excluding time for increasing temperature to the temperature at which the secondary sintering is performed and time for decreasing the temperature to room temperature after performing the secondary sintering.

Also, step (B) may further include a step (b1) of washing and drying, after the secondary sintering.

The washing is a process for removing unreacted residual lithium, wherein it is a process of washing by mixing a sintered product immediately after the secondary sintering and a washing solution and then separating the sintered product from the washing solution.

The washing solution may be water or ethanol, but is not limited thereto.

The washing solution may be mixed in an amount of 60 parts by weight to 200 parts by weight, specifically, 60 parts by weight or more, 80 parts by weight or more, 150 parts by weight or less, and 200 parts by weight or less based on 100 parts by weight of the sintered product. In a case in which the amount of the washing solution is within the above range, residual lithium present on a surface of the sintered product may be easily removed while preventing damage to the surface of the sintered product.

The drying is a process for removing moisture from the sintered product containing the moisture through the washing process, wherein it may be vacuum drying of the sintered product separated from the washing solution at 100°C to 150°C. In this case, the separation may be performed using a pressure-reducing filter having an average pore size of 1 um to 50 µm.

The lithium transition metal oxide prepared through step (B) may be a lithium transition metal oxide which contains 70 mol% or more of nickel (Ni) among total metals excluding lithium and is in the form of a secondary particle formed by aggregation of primary particles, and, specifically, may have a composition represented by Formula 1 below.

[Formula 1] LiₓNiₐ₁Co_{b1}Mn_{c1}Al_{d1}Bₑ₁M¹_{f1}O₂

In Formula 1,
M¹ is at least one selected from Zr, W, Mg, Ce, Hf, Ta, La, Ti, Sr, and Ba, and
0.90≤x≤1.12, 0.70≤a1≤1.0, 0≤b1≤0.30, 0≤c1≤0.30, 0≤d1≤0.20, 0<e1≤0.20, 0≤f1≤0.10, and a1+b1+c1+d1+e1+f1=1.
a1 represents an atomic fraction of nickel among metallic elements other than lithium in the positive electrode active material, wherein a1 may be 0.70 or more, 0.80 or more, 0.85 or more, 0.95 or less, 0.98 or less, and 1.0 or less in terms of improving the capacity of the battery.
b1 represents an atomic fraction of cobalt among the metallic elements other than lithium in the positive electrode active material, wherein b1 may be 0 or more, greater than 0, 0.01 or more, 0.10 or less, 0.20 or less, and 0.30 or less.
c1 represents an atomic fraction of manganese among the metallic elements other than lithium in the positive electrode active material, wherein c1 may be 0 or more, greater than 0, 0.01 or more, 0.10 or less, 0.20 or less, and 0.30 or less.
d1 represents an atomic fraction of aluminum among the metallic elements other than lithium in the positive electrode active material, wherein d1 may be 0 or more, greater than 0, 0.01 or more, 0.05 or less, 0.10 or less, and 0.20 or less. Specifically, d1 may be greater than 0, 0.01 or more, 0.05 or less, 0.10 or less, and 0.20 or less in terms of improving structural stability, lifetime, and thermal stability.
e1 represents an atomic fraction of boron among the metallic elements other than lithium in the positive electrode active material, wherein e1 may be greater than 0, 0.005 or more, 0.01 or more, 0.05 or less, 0.10 or less, and 0.20 or less.
f1 represents an atomic fraction of M¹ among the metallic elements other than lithium in the positive electrode active material, wherein f1 may be 0 or more, 0.05 or less, and 0.10 or less.

### Step (C)

Step (C) is a step of mixing the lithium transition metal oxide prepared in step (B) and a second boron-containing raw material and performing a heat treatment to form a coating layer.

A coating layer containing boron is formed on the lithium transition metal oxide through step (C). Specifically, a coating layer including a compound, such as a boron oxide and a Li-B-O solid solution, is formed on the surface of the lithium transition metal oxide. Since a side reaction with an electrolyte is suppressed by forming the coating layer on the lithium transition metal oxide, the degradation of the battery life characteristics may be prevented.

According to the present invention, the second boron-containing raw material may be at least one selected from H₃BO₃, H₄BO₄, B₂O₃, LiBO₂, Li₂B₄O₇, B₄C, AlBO₂, and AlB₂O₄. The second boron-containing raw material may be specifically H₃BO₃ and B₂O₃, and may be more specifically H₃BO₃. In this case, since a melting point of the boron-containing raw material is low, a uniform coating layer may be formed.

According to the present invention, the second boron-containing raw material may be mixed in an amount of 0.1 part by weight to 2.0 parts by weight, specifically, 0.1 part by weight or more, 0.2 part by weight or more, 0.235 part by weight or more, 1.14 parts by weight or less, 1.5 parts by weight or less, and 2.0 parts by weight or less based on 100 parts by weight of the lithium transition metal oxide. In a case in which the amount of the second boron-containing raw material is within the above range, since the coating layer is not only formed uniformly, but the coating layer with an appropriate thickness is also formed, life characteristics of a battery may be improved when the prepared positive electrode active material is used in the battery.

The mixing of the lithium transition metal oxide and the second boron-containing raw material may be dry mixing. In this case, there is an advantage in that impurities may be minimized in comparison to a case of wet mixing.

According to the present invention, the heat treatment temperature may be in a range of 200°C to 400°C. The heat treatment temperature may specifically be 200°C or higher, 250°C or higher, 260°C or higher, 330°C or lower, 350°C or lower, and 400°C or lower. In a case in which the heat treatment temperature is within the above range, since a coating layer is uniformly formed on the lithium transition metal oxide, life characteristics of a battery may be improved when the positive electrode active material is use in the battery.

### Positive Electrode

Also, the present invention provides a positive electrode including the positive electrode active material. The positive electrode may be a positive electrode for a lithium secondary battery.

Specifically, the positive electrode includes a positive electrode collector and a positive electrode active material layer formed on the positive electrode collector, wherein the positive electrode active material layer includes a positive electrode active material according to the present invention.

In this case, since the positive electrode active material is the same as described above, detailed descriptions thereof will be omitted, and the remaining configurations will be only described in detail below.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and may optionally include a binder, if necessary, in addition to the positive electrode active material.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 0.1 wt% to 15 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated-EPDM, a styrene-butadiene rubber (SBR), a fluorine rubber, or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder and the conductive agent in a solvent, is coated on the positive electrode collector, and the positive electrode may then be prepared by drying and rolling the coated positive electrode collector.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

### Lithium Secondary Battery

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte. Since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

The lithium secondary battery according to the present invention may have a ratio (30^{th} cycle capacity retention) of 30^{th} cycle discharge capacity to 1^{st} cycle discharge capacity, which is measured while repeating a charge/discharge cycle 30 times at a constant current of 0.33 C in a range of 3.0 V to 4.25 V at 45°C, of greater than 98.0%, or 98.5%.

In addition, while repeating a charge/discharge cycle 30 times at a constant current of 0.33 C in a range of 3.0 V to 4.25 V at 45°C, the lithium secondary battery according to the present invention may have a ratio (30^{th} cycle resistance increase rate) of direct current internal resistance (DCIR), which is obtained by dividing a voltage drop (ΔV) for 60 seconds in a 30^{th} discharge cycle by the current, to DCIR, which is obtained by dividing a voltage drop (ΔV) for 60 seconds in a 1^{st} discharge cycle by the current, of 120.0% or less.

As described above, since the lithium secondary battery including the positive electrode active material according to the present invention stably exhibits excellent high-temperature life characteristics and resistance characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

### EXAMPLES

### Example 1 (Example in which the ratio of the primary sintering temperature to the secondary sintering temperature was 0.75)

Ni_{0.88}Co_{0.05}Mn_{0.07}(OH)₂ and Al(OH)₃ were mixed in a molar ratio of 1:0.02, and LiOH·H₂O were additionally mixed so that a molar ratio of Li:transition metals (Ni+Co+Mn+Al) was 1.06:1 to prepare a reaction mixture. Primary sintering was performed on the reaction mixture at 600°C for 5 hours in an oxygen atmosphere to prepare a pre-sintered product (including LiNi_{0.86}Co_{0.05}Mn_{0.07}Al_{0.02}O₂).

The pre-sintered product and H₃BO₃ were mixed in a weight ratio of 100:0.63, and secondary sintering was performed at 800°C for 5 hours in an oxygen atmosphere to prepare a sintered product. The sintered product and water were mixed in a weight ratio of 100:120 to wash the sintered product for 5 minutes, and the washed product was reduced pressure filtered and then vacuum-dried at 130°C to prepare a lithium transition metal oxide (LiNi_{0.85}Co_{0.05}Mn_{0.07}Al_{0.02}B_{0.01}O₂).

Subsequently, the lithium transition metal oxide and H₃BO₃ were mixed in a weight ratio of 100:0.57 and heat-treated at 300°C for 4 hours in an oxygen atmosphere to prepare a positive electrode active material having a coating layer including B formed on a surface thereof.

### Example 2 (Example in which the ratio of the primary sintering temperature to the secondary sintering temperature was 0.88)

A positive electrode active material was prepared in the same manner as in Example 1 except that the primary sintering was performed at 700°C, instead of 600°C, in Example 1.

### Comparative Example 1 (Comparative Example in which the ratio of the primary sintering temperature to the secondary sintering temperature was 0.50)

A positive electrode active material was prepared in the same manner as in Example 1 except that the primary sintering was performed at 400°C, instead of 600°C, in Example 1.

### Comparative Example 2 (Comparative Example in which the ratio of the primary sintering temperature to the secondary sintering temperature was 0.63)

A positive electrode active material was prepared in the same manner as in Example 1 except that the primary sintering was performed at 500°C, instead of 600°C, in Example 1.

### Comparative Example 3 (Comparative Example in which the ratio of the primary sintering temperature to the secondary sintering temperature was 0.94)

A positive electrode active material was prepared in the same manner as in Example 1 except that the primary sintering was performed at 750°C, instead of 600°C, in Example 1.

### Comparative Example 4 (Comparative Example in which H₃BO₃ was mixed during primary sintering rather than secondary sintering)

Ni_{0.88}Co_{0.05}Mn_{0.07}(OH)₂ and Al(OH)₃ were mixed in a molar ratio of 1:0.02, LiOH·H₂O were additionally mixed so that a molar ratio of Li:transition metals (Ni+Co+Mn+Al) was 1.06:1, and H₃BO₃ was further mixed therein in an amount of 0.9 part by weight based on 100 parts by weight of Ni_{0.88}Co_{0.05}Mn_{0.07}(OH)₂ to prepare a reaction mixture. Primary sintering was performed on the reaction mixture at 600°C for 5 hours in an oxygen atmosphere to prepare a pre-sintered product.

Secondary sintering was performed on the pre-sintered product at 800°C for 5 hours in an oxygen atmosphere to prepare a sintered product. The sintered product and water were mixed in a weight ratio of 100:120 to wash the sintered product for 5 minutes, and the washed product was reduced pressure filtered and then vacuum-dried at 130°C to prepare a lithium transition metal oxide.

Subsequently, the lithium transition metal oxide and H₃BO₃ were mixed in a weight ratio of 100:0.57 and heat-treated at 300°C for 4 hours in an oxygen atmosphere to prepare a positive electrode active material having a coating layer including B formed on a surface thereof.

### Comparative Example 5 (Comparative Example in which the first boron-containing raw material was not mixed during secondary sintering)

Ni_{0.88}Co_{0.05}Mn_{0.07}(OH)₂ and Al(OH)₃ were mixed in a molar ratio of 1:0.02, and LiOH·H₂O were additionally mixed so that a molar ratio of Li:transition metals (Ni+Co+Mn+Al) was 1.06:1 to prepare a reaction mixture. Primary sintering was performed on the reaction mixture at 600°C for 5 hours in an oxygen atmosphere to prepare a pre-sintered product.

Secondary sintering was performed on the pre-sintered product at 800°C for 5 hours in an oxygen atmosphere to prepare a sintered product. The sintered product and water were mixed in a weight ratio of 100:120 to wash the sintered product for 5 minutes, and the washed product was reduced pressure filtered and then vacuum-dried at 130°C to prepare a lithium transition metal oxide.

Subsequently, the lithium transition metal oxide and H₃BO₃ were mixed in a weight ratio of 100:0.57 and heat-treated at 300°C for 4 hours in an oxygen atmosphere to prepare a positive electrode active material having a coating layer including B formed on a surface thereof.

### Experimental Example 1: Confirmation of Average Aspect Ratio of Primary Particles Present on Surface of the Positive Electrode Active Material

SEM images of each of the positive electrode active materials of Examples 1 and 2 and Comparative Examples 1 to 5 were obtained using an SEM (FEI^{™} Company, FEG250), an average aspect ratio of primary particles present on the surface of each positive electrode active material was confirmed by analyzing the SEM images, and the results thereof are presented in Table 1 below.

The average aspect ratio of the primary particles present on the surface of the positive electrode active material was obtained by the following method. First, after selecting a shape of one primary particle desired to be measured from the SEM image of the positive electrode active material using an Image J program (selecting it with a tool of the Image J program), Shape Descriptors was checked in Set Measure of Analyze and measurement was performed to obtain a ratio (aspect ratio) of a major axis to a minor axis passing through a center of an elliptical shape fitted similar to the shape of the primary particle. Aspect ratios of 17 to 21 primary particles were obtained for each positive electrode active material, and an average thereof was obtained to define this as the average aspect ratio of the primary particles.

FIGS. 1 to 7 are views illustrating the SEM images of the positive electrode active materials prepared in Examples 1 and 2 and Comparative Examples 1 to 5 and average aspect ratio measurement tables of the primary particles present on the surfaces of the positive electrode active materials in sequence, respectively.

**[Table 1]**

| | Average aspect ratio of the primary particles present on the surface of the positive electrode active material |
|---|---|
| Example 1 | 2.81 |
| Example 2 | 2.16 |
| Comparative Example 1 | 1.67 |
| Comparative Example 2 | 1.77 |
| Comparative Example 3 | 1.70 |
| Comparative Example 4 | 1.66 |
| Comparative Example 5 | 1.76 |

### Experimental Example 2: Lithium Secondary Battery Characteristics Evaluation

Each of the positive electrode active materials prepared in Examples 1 and 2 and Comparative Examples 1 to 5, a conductive agent (carbon black), and a binder (polyvinylidene fluoride) were mixed at a weight ratio of 96:2:2 in an NMP solvent to prepare a composition for forming a positive electrode. One surface of an aluminum current collector was coated with the composition for forming a positive electrode, dried at 130°C, and then roll-pressed to prepare a positive electrode. Lithium metal was used as a negative electrode.

An electrode assembly was prepared by disposing a porous polyethylene separator between the above-prepared positive electrode and the lithium metal negative electrode, the electrode assembly was disposed in a battery case, and an electrolyte solution was then injected into the case to prepare each lithium secondary battery half-cell. In this case, as the electrolyte solution, an electrolyte solution was used in which 1.0 M LiPF₆ was dissolved in a mixed solvent in which ethylene carbonate(EC) :dimethyl carbonate (DMD) :ethylmethyl carbonate (EMC) were mixed in a volume ratio of 3:4:3.

Each of the above-prepared lithium secondary battery half-cells was charged at a constant current of 0.1 C to 4.25 V in a constant current/constant voltage (CC/CV) mode at 25°C, and then discharged to 3 V in a CC mode (constant current of 0.1 C) to measure initial charge capacity, initial discharge capacity, and initial efficiency, and the results thereof are presented in Table 2 below.

Also, for each of the above-prepared lithium secondary battery half-cells, the charge and discharge cycle was repeated 30 times at a constant current of 0.33 C in a range of 3.0 V to 4.25 V at 45°C to measure capacity of the lithium secondary battery, and, particularly, a ratio of 30^{th} cycle discharge capacity to 1^{st} cycle discharge capacity was set as a capacity retention and the capacity retentions are presented in Table 2 below. Furthermore, a ratio of DCIR, which was obtained by dividing a voltage drop (ΔV) for 60 seconds in a 30^{th} discharge cycle by the current, to DCIR, which was obtained by dividing a voltage drop (ΔV) for 60 seconds in a 1^{st} discharge cycle by the current, was defined as a resistance increase rate and the resistance increase rates are presented in Table 2 below.

**[Table 2]**

| | 25°C 0.1C/0.1C | | | 45°C 0.33C/0.33C | |
|---|---|---|---|---|---|
| | Initial charge capacity (mAh) | Initial discharge capacity (mAh) | Initial efficien cy (%) | 30^{th} cycle capacity retention (%) | 30^{th} cycle resistance increase rate (%) |
| Example 1 | 229.8 | 210.5 | 91.6 | 99.0 | 117.8 |
| Example 2 | 230.5 | 211.7 | 91.8 | 98.6 | 119.7 |
| Comparative Example 1 | 230.4 | 212.0 | 92.0 | 97.9 | 125.7 |
| Comparative Example 2 | 230.1 | 212.9 | 92.5 | 97.8 | 128.0 |
| Comparative Example 3 | 229.2 | 211.4 | 92.2 | 98.0 | 122.4 |
| Comparative Example 4 | 230.7 | 213.8 | 92.7 | 97.7 | 131.6 |
| Comparative Example 5 | 226.6 | 208.5 | 92.0 | 96.8 | 130.5 |

Referring to Table 2, with respect to the batteries in which the positive electrode active materials of Examples 1 and 2 are used, since capacity retentions at high temperature were high and resistance increase rates were low while initial efficiencies equivalent to those of Comparative Examples 1 to 5 were achieved, degradation of the batteries at high temperature was prevented, and thus, it may be confirmed that high-temperature life characteristics were significantly better.

As a result, in the present invention, it may be understood that the primary particles present on the surface of the prepared positive electrode active material may have a specific aspect ratio by adding the first boron-containing raw material in the second sintering step, after the primary sintering, and performing the sintering under a condition in which the primary sintering temperature and the secondary sintering temperature satisfy a specific ratio during the preparation of the positive electrode active material. In addition, with respect to the battery in which the positive electrode active material prepared according to the method of preparing a positive electrode active material of the present invention was used, it may be understood that both the capacity retention at high temperature and the resistance increase rate at high temperature may be improved.

## Claims

1. A positive electrode active material comprising a lithium transition metal oxide which contains 70 mol% or more of nickel (Ni) among total metals excluding lithium and is in a form of a secondary particle formed by aggregation of primary particles; and
a coating layer containing boron (B) which is formed on the lithium transition metal oxide,
wherein an average aspect ratio of the primary particles present on a surface of the lithium transition metal oxide is in a range of 1.8 to 6.0.

2. The positive electrode active material of claim 1, wherein the lithium transition metal oxide has a composition represented by Formula 1:
[Formula 1] LiₓNiₐ₁Co_{b1}Mn_{c1}Al_{d1}Bₑ₁M¹_{f1}O₂
wherein, in Formula 1,
M¹ is at least one selected from zirconium (Zr), tungsten (W), magnesium (Mg), cerium (Ce), hafnium (Hf), tantalum (Ta), lanthanum (La), titanium (Ti), strontium (Sr), and barium (Ba), and
0.90≤x≤1.12, 0.70≤a1≤1.0, 0≤b1≤0.30, 0≤c1≤0.30, 0≤d1≤0.20, 0<e1≤0.20, 0≤f1≤0.10, and a1+b1+c1+d1+e1+f1=1.

3. A method of preparing a positive electrode active material, the method comprising steps of:
(A) preparing a pre-sintered product by performing primary sintering of a reaction mixture including a lithium-containing raw material and a positive electrode active material precursor containing 70 mol% or more of nickel (Ni) among total metals at a primary sintering temperature;
(B) preparing a lithium transition metal oxide by mixing the pre-sintered product and a first boron-containing raw material and performing secondary sintering at a secondary sintering temperature; and
(c) mixing the lithium transition metal oxide and a second boron-containing raw material and performing a heat treatment to form a coating layer,
wherein the first boron-containing raw material is mixed in an amount of 0.1 part by weight to 2.0 parts by weight based on 100 parts by weight of the pre-sintered product, and
a ratio of the primary sintering temperature to the secondary sintering temperature is in a range of 0.7 to 0.9.

4. The method of claim 3, wherein the positive electrode active material precursor has a composition represented by Formula 2-1 or Formula 2-2:
[Formula 2-1] Niₐ₂Co_{b2}Mn_{c2}M²_{d2}(OH)₂
[Formula 2-2] Niₐ₂Co_{b2}Mn_{c2}M²_{d2}O·OH
wherein, in Formula 2-1 and Formula 2-2,
M² is at least one selected from zirconium (Zr), boron (B), tungsten (W), magnesium (Mg), cerium (Ce), hafnium (Hf), tantalum (Ta), lanthanum (La), titanium (Ti), strontium (Sr), and barium (Ba), and
0.70≤a2≤1.0, 0≤b2≤0.30, 0≤c2≤0.30, 0≤d2≤0.10, and a2+b2+c2+d2=1.

5. The method of claim 3, wherein the reaction mixture further comprises an aluminum-containing raw material.

6. The method of claim 3, wherein the primary sintering temperature is in a range of 300°C to 750°C.

7. The method of claim 3, wherein the first boron-containing raw material is at least one selected from H₃BO₃, H₄BO₄, B₂O₃, LiBO₂, Li₂B₄O₇, B₄C, AlBO₂, and AlB₂O₄.

8. The method of claim 3, wherein the secondary sintering temperature is in a range of 500°C to 900°C.

9. The method of claim 3, wherein the second boron-containing raw material is at least one selected from H₃BO₃, H₄BO₄, B₂O₃, LiBO₂, Li₂B₄O₇, B₄C, AlBO₂, and AlB₂O₄.

10. The method of claim 3, wherein the second boron-containing raw material is mixed in an amount of 0.1 part by weight to 2.0 parts by weight based on 100 parts by weight of the lithium transition metal oxide.

11. The method of claim 3, wherein the heat treatment is performed at a temperature of 200°C to 400°C.

12. A positive electrode comprising the positive electrode active material of claim 1.

13. A lithium secondary battery comprising the positive electrode of claim 12.
